# EUROPEAN PATENT APPLICATION

(11) **EP 3 885 195 A1**
(43) Date of publication of application: **29.09.2021**
(21) Application number: 20165440.7
(22) Date of filing: 25.03.2020
(51) Int. Cl.: B60Q 3/80, B60Q 3/76, B60Q 3/20

(54) **SYSTEM AND METHOD FOR PROVIDING VISUAL GUIDANCE USING LIGHT PROJECTION**

(71) Applicant: Bayerische Motoren Werke Aktiengesellschaft, 80809 München (DE)
(72) Inventor: Koser, Iris, San Carlos, CA California 94070 (US); Eichhorn, Julian, Menlo Park, CA California 94025 (US); Wang, Wei, San Francisco, CA California 94122 (US); Mantovani, Francesco, San Jose, CA California 95112 (US); Mok, Brian, Santa Clara, CA California 95050 (US)

(57) **Abstract**

A system (100) and method for providing visual guidance to a user in a vehicle via light beam projection. A projected light beam is used to guide users in a vehicle to view from one projection position to another. This guidance can bring the user's attention from an area of origin to the area of desire. The system includes a projector (110) installed in a cabin of a vehicle to project a light beam in the vehicle and a controller (120) configured to control the projector (110) to adjust the light beam to provide visual guidance to a user in the vehicle. The projector (120) may animate the light beam from a first area in the vehicle to a second area in the vehicle to provide the visual guidance. The system (100) may include one or more sensing devices (130) and the projector (110) may animate the light beam based on input from the sensing devices (130).

## Description

### Field

Examples relate to providing visual guidance to a user in a vehicle, more particularly a system and method for providing visual guidance to a user in a vehicle using projection.

### Background

A motor vehicle has a lighting system for illuminating the interior of the vehicle. The automotive interior illumination is usually not capable of visually guiding the user's attention. Information relevant for the driver and passengers is usually shown on a display or instrument cluster of a vehicle. Conventionally, there is no visually connected transition from one display area to another.

### Summary

Examples disclosed herein relate to a projection system for providing a visual guidance to a user via projection of a light beam. The projection system includes a projector and a controller. The projector is installed in a cabin of a vehicle to project a light beam inside or outside the vehicle. The controller is configured to control the projector to adjust or steer the light beam to provide visual guidance to a user (a driver or a passenger) in the vehicle or any person outside the vehicle. The projector may animate a light beam from a first area to a second area in the vehicle to provide the visual guidance. This guidance using the projection of animated light beam can bring the user's attention from an area of origin (the initial projection point) to the area of desire (the final projection point). The projector may be a fixed unit. Alternatively, the projector may be installed on a gimbal so that the projector may rotate or tile to cover a wide area. The light beam may be a beam for illumination purposes or a pixel-based illumination.

In one example, the projection system may be configured to animate the light beam if it is needed to take over from autonomous driving. For example, the projection system may project an animated light beam from the driver's hand or the area the driver is looking at to the steering wheel or dashboard, etc. of the vehicle.

In some examples, the system may include one or more sensing devices. The sensing device (e.g. a camera-based driver monitoring system) may be configured to determine the direction that the driver is looking at. The projection system may project an animated light beam from the area that the driver is looking at to a front side of the vehicle (e.g. a steering wheel or dashboard) if it is determined that the driver is not looking at the front direction of the vehicle.

In another example, the system may include a first sensing device configured to determine whether a user dropped a thing and a second sensing device configured to detect the thing on the floor of the vehicle in response to a determination from the first sensing device. The projection system may be configured to steer the light beam to illuminate the thing dropped on the floor or toward that direction based on an input from the second sensing device.

In some example, the projection system may be configured to illuminate inside the vehicle with a mood lighting when a driver/passenger enters the vehicle and then project a light beam to a specific content on a dashboard or any other place of the vehicle. With this scheme the projection system may provide a welcoming atmosphere to the driver or passenger and then show or highlight a specific content (e.g. on the dashboard) that the driver or passenger needs to know or to pay attention to.

The vehicle may have an in-vehicle assistant system (e.g. in-car voice assistant). The in-vehicle assistant system provides an assistance to the user in response to a user's request (e.g. a voice request). In some example, the projection system may be configured to adjust or steer the light beam in synchronization with the information provided by the in-vehicle assistant system.

In some example, the projection system may include a sensing device configured to detect a pedestrian, a biker, or any moving object near the vehicle or a dangerous condition in front of the vehicle, and the projection system may be configured to control the light beam to provide an alarm signal to a driver of the vehicle regarding the pedestrian, the biker, the moving object, or the dangerous condition, or to warn or guide a person outside the vehicle.

In examples, the projection system may be configured to morph a form and/or a size of the light beam while transitioning from the first area to the second area. In some examples, the projection system may be configured to project a light beam for gamification in the vehicle.

### Brief description of the Figures

Some examples of apparatuses and/or methods will be described in the following by way of example only, and with reference to the accompanying figures, in which
Fig. 1 is a block diagram of an example projection system for providing visual guidance to a user in a vehicle via projection of a light beam;
Fig. 2 shows an example projection system that generates an animation of the light beam to provide visual guidance to a user in a vehicle;
Fig. 3 shows another example of animated light beam projection; and
Fig. 4 is a flow diagram of an example process for providing visual guidance to a user via projection.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed for a system and method for providing visual guidance to a user in a vehicle via light beam projection. The user may be a driver or a passenger of a vehicle or any person inside or outside a vehicle (e.g. a pedestrian, a biker). In examples, a projected light beam is used to guide a user(s) in a vehicle to view from one projection position to another. This guidance via an animated light beam projection can bring the user's attention from an area of origin (the initial projection point) to the area of desire (the final projection point). This can increase both the safety of driving (e.g. in a takeover case from autonomous driving, for awareness of dangerous conditions, etc.) and also increase the users' experience with the vehicle and driving. In examples, the projection of light may not be bound to one specific appearance of the light beam and may transform from one position to another in any form or size (e.g. content, projection mapping, graphical, animation, or the like).

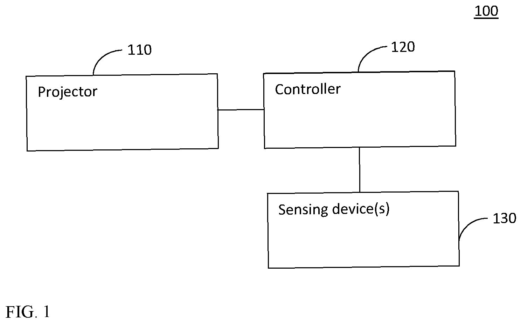

Fig. 1 is a block diagram of an example projection system 100 for providing visual guidance to a user in a vehicle via projection of a light beam. The projection system 100 includes a projector 110 and a controller 120. The projection system 100 may further include a sensing device(s) 130. The projector 110 is installed in a cabin of a vehicle. The vehicle may be any type of machine for transportation including, but not limited to, a car, a truck, a bus, a sport utility vehicle, a recreation vehicle, a motorcycle, or the like. The projector 110 and the controller 120 may be incorporated into a single device or separate devices.

The projector 110 is a device for projecting a light beam. The projector 110 may be installed on a ceiling of a vehicle, e.g. above the dashboard of the vehicle, or any other place in a vehicle. Depending on a use case, one projector 110 or two or more projectors 110 may be used in the vehicle (e.g. for each passenger). Alternatively, multiple projection systems 100 may be installed in the vehicle. The projector 110 includes a lighting unit (not shown) for generating a light beam. The light source may be one or more light emitting diodes (LED), organic light emitting diodes (OLED), laser diodes, a digital light processor (DLP) projector, a liquid crystal display (LCD) imager, or the like.

In one example, the light beam generated by the projector 110 may be a beam for illumination purposes only. Alternatively, the light beam may be a pixel-based illumination for image, graphics, texts, or the like. A pixel-based illumination is a technique for lighting an image that calculates illumination for each pixel on a rendered image. The projector 110 may project a functional light of any brightness, color, or content in any angle and to any position in an interior of a vehicle.

The projector 110 is configured to steer the light beam in any direction to provide a visual guidance to a user in the vehicle. The projector 110 may be a fixed unit (i.e. fixed in a specific location) with a beam steering capability in a certain degree. The projector 110 has a certain field of illumination and may steer a light beam within the field of illumination. The projector 110 may include a wide-angle optics at an output for providing a wide field of illumination to cover a wide area. Alternatively, the projector 110 may be installed on a gimbal (or a similar device) such that the projector 110 may rotate or tilt to cover a wider range (360°, 270°, 180°, or any other angle) in a three-dimensional space.

The projector 110 is coupled to the controller 120. The controller 120 controls the projector 110 (including a gimbal) such that the projector 110 may project an animated light beam from one place to another e.g. from a first area in the vehicle to a second area in the vehicle (i.e. a moving projection of a light beam from one area to another) to provide the visual guidance.

The system 100 may include one or more sensing devices 130 to perceive the inside and/or outside of the vehicle. The controller 120 receives a signal (input) from the sensing device(s) 130 and may control the projector 110 based on the signal from the sensing device(s) 130. The sensing device(s) 130 may include a radar(s), camera-based monitoring systems, proximity sensors, microphones, a Global Positioning System (GPS) receiver, etc. A camera-based monitoring system(s) may be installed inside the vehicle to monitor a driver or a passenger, or the interior space of the vehicle. A camera-based monitoring system(s) may be installed outside the vehicle to monitor or detect dangerous conditions on the road, pedestrians, bikers, or other vehicles approaching to, or passing by, or the like.

The system 100 may also include additional functional units (not shown), such as a wireless and/or wired communication unit, an input unit, an output unit, a storage, or the like.

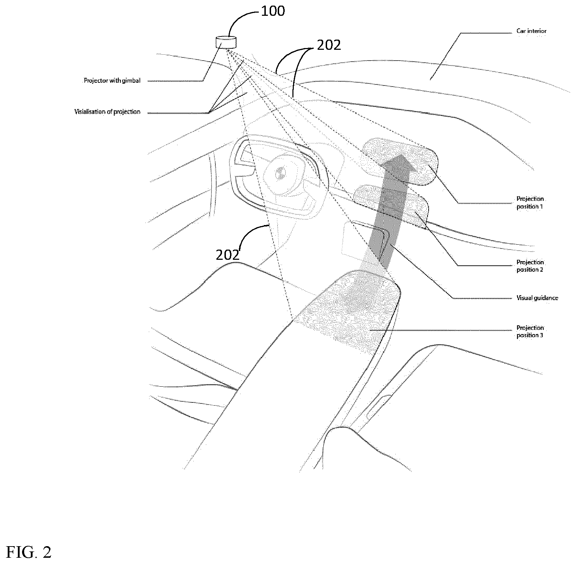

Fig. 2 shows an example projection system 100 that generates an animation of the light beam to provide visual guidance to a user in a vehicle. In this example, the projection system 100 is installed on a ceiling of a car, but the projection system 100 may be installed in other places inside a vehicle. Fig. 2 shows only one projection system 100 but more than one projection system or more than one projector 110 controlled by one or more controllers may be installed inside a vehicle depending on the use cases. Fig. 2 shows one example that the projection system 100 projects an animated light beam 202 to bring the user's attention to the desired area. For example, in Fig. 2, the light beam 202 may be projected to position 1 and then moved to position 2, and then to position 3, or vice versa. With this animated light beam projection, the user's attention may be brought between position 1 and position 3.

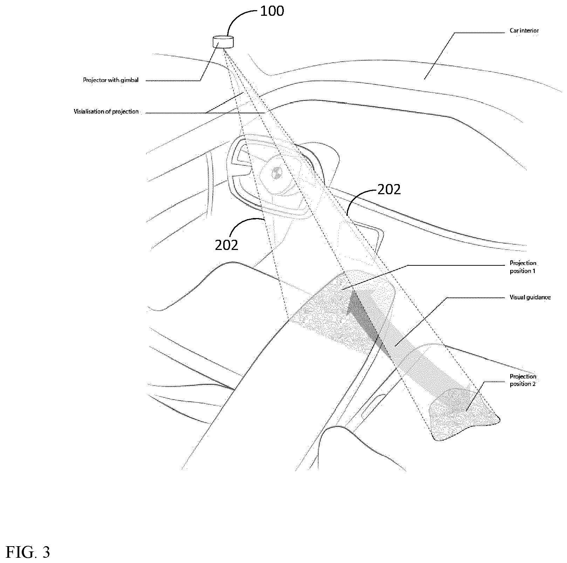

Fig. 3 shows another example of animated light beam projection. In Fig. 3, the light beam 202 may be projected to position 2 and then moved to position 1. With this animated light beam projection, the user's attention may be brought from position 2 to position 1.

Hereafter, specific examples of using the projection system 100 for providing visual guidance to a user in a vehicle via projection of a light beam will be explained. It should be noted that the following description is merely some example use cases and the invention is not limited to the specific example use cases disclosed herein but may be applied to other example use cases.

In one example, the projection system 100 may be used to bring the driver's attention to driving by projecting an animated light beam if it is detected that the driver is distracted or is not paying attention to driving. The projection system 100 may include a camera-based driver monitoring system to monitor a driver's status (e.g. the direction that the driver is looking at). For example, if the projection system 100 detects the driver is distracted or is not paying attention to driving, the projection system 100 may project a light beam first to the driver's hands and then to the steering wheel, the dashboard, or other place in a front direction of the vehicle (i.e. projecting an animated light beam from one area to another). With the projected animated light beam, the driver's attention may be brought back to driving. Alternatively, the projection system may project a light beam first to the area that the driver is looking at and then to the steering wheel, the dashboard, or other place in a front direction of the vehicle.

The driver's status (or any passenger's status) may be detected by a camera-based driver monitoring system. The camera-based driver monitoring system may monitor the driver fatigue, drowsiness, direction of gaze, or distraction in real-time. A camera-based eye or gaze tracking system may be used to measure the point of gaze or the motion of eyes relative to the head. A camera-based head-pose tracking system may be used to estimate the head-pose angle, which may be used as an estimation of the gaze direction. The camera-based driver monitoring system, the eye/gaze tracking system, or the head-pose tracking system may be installed in a dashboard, in a steering wheel, on a ceiling, or any other place in a vehicle that can see the driver or passenger well. Based on the monitored or detected information regarding drivers' status or gaze direction, the projection system may project an animated light beam to bring the driver's attention back to driving.

In another example, the projection system 100 may be used to guide the user's attention in a takeover situation during autonomous driving. The vehicle may be capable of autonomous driving (e.g. self-driving). Different levels of autonomous driving may be implemented ranging from a driver assistance mode to a fully-automated driving mode. The driver assistance mode supports drivers on the road and help ensure additional safety and comfort (e.g. collision prevention and automatic breaking, etc.). In the fully-automated driving mode, the vehicle can handle the majority of driving situations independently. In the fully-automated driving mode or in a partially-automated driving mode, the driver may be engaged in other activities, such as watching a movie, reading a book, or using a smart phone, etc. When it is determined that the driver needs to take over from the autonomous driving (e.g. when the autonomous driving system sends a takeover request), the projection system 100 may be used to bring the driver's attention back to driving, for example by projecting an animated light beam (e.g. projecting a light beam first to the driver's hands or to the area the driver is looking at and then to the steering wheel of the vehicle). Alternatively, the projection system 100 may project a certain symbol (e.g. a warning sign, etc.), a flashing or blinking light, or any other proper light beam toward the area the driver is looking at or in general inside the vehicle. The driver's hands or the area the driver is looking at may be determined by the camera-based driver monitoring system, the eye/gaze tracking system, or the head-pose tracking system and this information is sent to the projection system to steer the light beam toward the target area.

In another example, the projection system 100 may provide a visual guidance to remind or encourage the user to wear a seatbelt. For example, if it is determined that the user is not wearing a seatbelt while driving or when starting the vehicle, the projection system 100 may project an animated light beam first to the area the driver is looking at and then to the seatbelt buckle, and maybe further to the receptacle of the seatbelt buckle. Alternatively, when the user enters a vehicle, the projection system 100 may project a light beam to the seatbelt buckle or project an animated light beam from some place to the seatbelt buckle, and maybe further to the receptacle of the seatbelt buckle.

In another example, the projection system 100 may be used to help a user (a driver or a passenger) to find an item the user dropped in a vehicle. A camera-based monitoring system may detect that a user dropped something or something is dropped and detect the dropped thing on the floor of the vehicle, and the projection system 100 may project a light beam toward the dropped thing on the floor. For example, a first camera-based monitoring/detection system may be installed in a vehicle to monitor a user and if the first camera-based monitoring/detection system detects that a user dropped something or something is dropped, a second camera-based monitoring/detection system installed to see the floor of the vehicle may, in response to the detection from the first camera-based monitoring/detection system, find the item on the floor of the vehicle and send a signal to the projector 110. The projector 110 may then, based on the signal from the second camera-based monitoring/detection system, project a light beam toward the dropped item, or project an animated light beam, for example, from the area the driver/user is looking at to the area the dropped item is located.

In another example, the projection system 100 may be used to provide information or guidance to the user. The vehicle may include an in-vehicle assistant system (an intelligent personal assistant). The in-vehicle assistant system (e.g. an in-car voice assistant) provides an assistance to a driver or a passenger, for example to make a phone call, provide directions, send a text message, search for, and provide, information, control in-vehicle devices, or the like. When the user requests the in-vehicle assistant system to provide some information or guidance, the projection system 100 may steer the light beam in synchronization with the assistance provided by the in-vehicle assistant system. For example, if the user asks the in-vehicle assistant system where to find a button to open the trunk, the in-vehicle assistant system analyzes the voice request and sends a signal to the projection system 100 such that the projection system 100 may project a light beam toward the trunk button in the vehicle or project an animated light beam from one place to the trunk button. In another example, if the user asks the in-vehicle assistant system how to operate a certain in-vehicle device (e.g. how to operate a climate control system, an audio or video player, etc.), the in-vehicle assistant system analyzes the voice request and may provide verbal explanation to the user. The projection system 100 may project a light beam in synchronization with the verbal explanation. For example, the projection system 100 may project a light beam toward the corresponding button, knob, or any relevant point of the vehicle in each step of the operation of the in-vehicle device in synchronization with the verbal explanation. Alternatively, the guidance through the light beam projection may be provided without the verbal explanation (i.e. just by illuminating the button/knob/area in series).

In some examples, the projection system 100 may morph the form and/or size of the light beam in transition to another position to show or highlight the content. For example, if the user asks the in-vehicle assistant system where to find the button to open the trunk, the projection system 100 may project an animated light beam toward the trunk button while morphing the form and/or size of the light beam at the target location (e.g. start with a wider beam and highlight the button with a brighter and smaller spotlight).

The projection system 100 may co-operate with the in-vehicle assistant system in providing the information or guidance. For example, while the in-vehicle assistant system is running to generate a response to the user's request, the projection system 100 may project a visual representation (e.g. a moving icon or image, etc.) indicating that the in-vehicle assistant system is running in response to the user's request. In another example, the projection system 100 may project a light beam toward a person or any object or surface near the person who is currently interacting with the in-vehicle assistant system.

In another example, when an area of projection runs out of space (i.e. too small for projection e.g. projection to a hand), the projection system 100 may search for a better display area for the projected content and may transition the projected content onto the better display area. For example, when the passenger asks the in-car assistant system about the current outside temperature, the temperature values may be projected on the passenger's hand (e.g. a minimal projected UI). If the passenger asks for more detailed information about the weather, the projection may transform to another, better display area (e.g. the projection system 100 may project the requested content onto the armrest or headrest area, a dashboard, or any other proper place) to show a more detailed content. For the transition from the passenger's hand to another display area, the visual guidance can help the user to understand where the expanded content will be displayed next.

In another example, the projection system 100 may project (e.g. pop-up) a content in the best area of view of the person that wants or requests to communicate with the in-car assistant system. For example, the projection system 100 may detect where the person's field of view is and then projects a content respective to that position to an area where the person can see the assistant the best. The projection system 100 may continuously or periodically track and follow the person's field of view (using the methods disclosed above) and keep the projection on the best visible projection area for the user, even if the person is moving.

In another example, the projection system 100 may be used for welcoming a driver or passenger. For example, the projection system 100 may illuminate an interior of the vehicle with a mood lighting (i.e. any lighting that can enhance the atmosphere in the vehicle) when a driver/passenger enters a vehicle. The illumination may include a text and/or an image for welcoming the driver/passenger. At the next step, the projection system 100 may illuminate a certain content, e.g. on the dashboard, that the driver/passenger needs to pay attention to.

In another example, the projection system 100 may be used to provide a warning signal to a driver of the vehicle regarding a pedestrian, a biker, a car, or the like passing by or approaching toward the vehicle, or any dangerous situation nearby or in front of the vehicle. For example, the vehicle may include proximity sensors and/or camera-based monitoring systems to detect pedestrians, bikers, cars, or any other objects nearby, or a camera-based system to detect a dangerous situation nearby or in front of the vehicle (e.g. existence of a pot hole or an accident in front). Upon detection of the passengers, bikers, or cars, etc. or any dangerous situation, the projection system 100 may project a light beam or an animated light beam to provide an alarm signal to a driver or passenger of the vehicle (e.g. project a light beam from left to right or from right to left on the dashboard or project an alarm sign or symbol on the dashboard, to an area the driver is looking at, or any other proper surface/location in the vehicle). The projection system 100 may also indicate the direction of travel of the pedestrian, biker, car, or the like. For example, if a passing pedestrian is detected approaching from the right side, the projection system 100 may project an animated light beam to show the direction of travel of the pedestrian (e.g., by animating a light beam from a right A pillar to a left A pillar of the vehicle). Alternatively, the projection system 100 may project a symbol or image (e.g. an arrow, a triangle, etc.) indicating the direction of travel of the pedestrian, etc.

In another example, the projection system 100 may be used for gamification. For example, the projection system 100 may project a moving image of a ping pong ball for ping pong game between passengers in a vehicle. The projection system 100 operates with a camera-based control system. The control system detects and tracks the users' hands or any gaming items or users' actions and the projection system 100 may project the image of a ping pong ball based on an input from the control system.

The above examples are explained with reference to in-vehicle usages. However, the projected visual guidance disclosed herein is not restricted to in-vehicle use only but can also be used for outside communication, i.e. out-of-vehicle usages.

In one example, when a user (e.g. a passenger or a driver) is approaching the vehicle, the projection system 100 may generate a projection on the exterior of the vehicle for welcoming the user. For example, the projection system 100 may project a projection on the window or an outside of the vehicle, e.g. a welcoming text to the approaching person. The projection system 100 may project an animated projection for the person to do something via visual guidance (e.g. guide the person to put a hand on the window for authentication purposes).

When the user opens the vehicle's door from the outside, the projection system 100 may provide a visual guidance to the user starting from an initial projection point outside the vehicle e.g. on the street (e.g. a welcome text or pattern) towards some point inside the vehicle (e.g. transforms from projection on the street to some animation on the dashboard with another welcome message).

In another example, the projection system 100 may generate the projected visual guidance for outside communication with, i.e. for any person(s) outside the vehicle, for example crossing/passing people (e.g. pedestrians, bikers, etc.). For example, the projection system 100 may generate a projection to either warn the crossing/passing people (e.g. project warning animation on a street level to warn a crossing/passing pedestrian) or allow the crossing/passing people to pass the road (e.g. project a crosswalk animation to guide the pedestrian safely over the street).

In another example, the projection system 100 may be used to highlight certain things on the road for the driver (e.g. dangerous hazards like potholes on the street). This may depend on the outside light conditions but could enhance safety features for night driving. When the view for the driver is limited due to darkness, the projection system 100 could help the driver by highlighting road conditions or other things like approaching or crossing animals e.g. deer crossing the road, etc. The projection system 100 may be used for guiding some features.

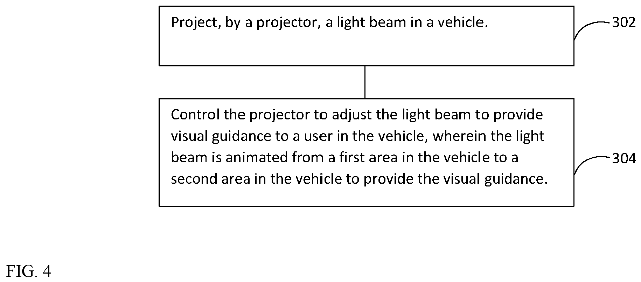

Fig. 4 is a flow diagram of an example process for providing visual guidance to a user via projection. The method includes projecting, by a projector, a light beam in a vehicle (302). The method includes controlling the projector to adjust the light beam to provide visual guidance to a user in the vehicle (304). The light beam may be animated from a first area in the vehicle to a second area in the vehicle to provide the visual guidance. The animated light beam may be projected if it is needed to take over from autonomous driving. The first area may be user's hands or the area the driver is looking at and the second area may be a steering wheel or dashboard of the vehicle, or the like. The projector may be a fixed unit or may be installed on a gimbal so that the projector may rotate or tile to cover a wide area. The light beam may be a beam for illumination purposes or a pixel-based illumination.

The method may further includes determining whether a driver of the vehicle is looking at a front side of the vehicle, and animating the light beam if it is determined that the driver is not looking at the front side of the vehicle.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A system for providing visual guidance to a user using projection, comprising:
a projector installed in a cabin of a vehicle to project a light beam; and
a controller configured to control the projector to adjust the light beam to provide visual guidance to a user in the vehicle or a person outside the vehicle.

2. The system of claim 1, wherein the projector is configured to animate the light beam from a first area in the vehicle to a second area in the vehicle to provide the visual guidance.

3. The system of claim 2, wherein the projector is configured to animate the light beam if it is needed to take over from autonomous driving, wherein the second area is a steering wheel of the vehicle.

4. The system of claim 2, further comprising:
a sensing device configured to detect a direction that a driver of the vehicle is looking at,
wherein the projector is configured to project an animated light beam from an area that the driver is looking at to a front side of the vehicle if it is determined that the driver is not looking at a front direction of the vehicle.

5. The system of claim 4, wherein the first area is an area the user is looking at and the second area is a steering wheel of the vehicle.

6. The system of claim 2, wherein the first area is an area the user is looking at and the second area is a seatbelt buckle.

7. The system of claim 2, further comprising:
a first sensing device configured to determine whether a user dropped a thing; and
a second sensing device configured to detect the thing on a floor of the vehicle in response to a determination from the first sensing device,
wherein the projector is configured to steer the light beam to illuminate the thing dropped on the floor of the vehicle based on an input from the second sensing device.

8. The system of claim 2, wherein the projector is configured to illuminate inside the vehicle with a mood lighting when a driver enters the vehicle and then project a light beam to a specific content on a dashboard or any place in the vehicle.

9. The system of claim 2, wherein the projector is configured to steer the light beam in synchronization with information provided by an in-vehicle assistant system configured to provide assistance to the user in response to a user's request.

10. The system of claim 2, further comprising:
a sensing device configured to detect a pedestrian, a biker, or another moving object near the vehicle or a dangerous condition in front of the vehicle,
wherein the projector is configured to control the light beam to provide an alarm signal to a driver of the vehicle regarding the pedestrian, the biker, the moving object, or the dangerous condition, or to warn or guide the person outside the vehicle.

11. The system of claim 2, wherein the projector is configured to morph a form and/or a size of the light beam while transitioning to the second area.

12. The system of claim 2, wherein the projector is configured to project the light beam for gamification in the vehicle.

13. The system of claim 1, wherein the projector is installed on a gimbal.

14. The system of claim 1, wherein the light beam is a pixel-based illumination.

15. A method for providing visual guidance to a user using projection, comprising:
projecting, by a projector, a light beam; and
controlling the projector to adjust the light beam to provide visual guidance to a user in the vehicle or a person outside the vehicle.

16. The method of claim 15, wherein the light beam is animated from a first area in the vehicle to a second area in the vehicle to provide the visual guidance.

17. The method of claim 15, wherein an animated light beam is projected if it is needed to take over from autonomous driving, wherein the second area is a steering wheel of the vehicle.

18. The method of claim 15, further comprising:
determining a direction that a driver of the vehicle is looking at; and
projecting an animated light beam from an area that the driver is looking at to a front side of the vehicle if it is determined that the driver is not looking at a front direction of the vehicle.

19. The method of claim 15, further comprising:
detecting a pedestrian, a biker, or another moving object near the vehicle or a dangerous condition in front of the vehicle,
wherein the light beam is controlled to provide an alarm signal to a driver of the vehicle regarding the pedestrian, the biker, the moving object, or the dangerous condition, or to warn or guide the person outside the vehicle.

20. A non-transitory machine-readable storage medium including machine readable instructions, when executed, to implement a method of claim 15.
